# EUROPEAN PATENT SPECIFICATION

(11) **EP 3 040 893 B1**
(45) Date of publication and mention of the grant of the patent: **30.01.2019**
(21) Application number: 14200503.2
(22) Date of filing: 30.12.2014
(51) Int. Cl.: G06F 21/32, G06F 21/84

(54) **Display of private content**
Anzeige von privatem Inhalt
Affichage d'un contenu privé

(43) Date of publication of application: 06.07.2016
(73) Proprietor: Nokia Technologies Oy, 02610 Espoo (FI)
(72) Inventor: Roimela, Kimmo, 33710 Tampere (FI); Leppänen, Jussi, 33580 Tampere (FI); Eronen, Antti, 33820 Tampere (FI); Lehtiniemi, Arto, 33880 Lempäälä (FI)
(74) Representative: Nokia EPO representatives

(56) References cited:
- WO-A1-2014/093293
- US-A1- 2009 141 895
- US-A1- 2010 205 667

## Description

### TECHNICAL FIELD

The present application relates generally to display of private content.

### BACKGROUND

As electronic apparatuses become increasingly prevalent and pervasive in our society, people increasingly utilize electronic apparatuses to view content. Many viewers may rely on electronic apparatuses for purposes relating to viewing particular content. As such, it may be desirable to configure an electronic apparatus such that the electronic apparatus facilitates viewing particular content in an intuitive and simple manner. US20100205667 A1 is a publication that discusses a video-based privacy support system. WO2014093293 A1 is a publication that discusses an unauthorized viewer detection system and method. US20090141895 A1 is a publication that discusses a method and apparatus for secure display of visual content

### SUMMARY

Various aspects of examples of the invention are set out in the claims.

One or more embodiments may provide an apparatus, a computer readable medium, a non-transitory computer readable medium, a computer program product, and/or a method for receipt of information indicative of a first viewer being able to visually perceive at least part of a display and information indicative of a second viewer being able to visually perceive at least part of the display, determination of first viewer private content associated with the first viewer, receipt of information indicative of the second viewer being unable to visually perceive at least part of the display, causation of display of the first viewer private content based, at least in part, on the second viewer being unable to visually perceive at least part of the display, receipt of information indicative of the second viewer being able to visually perceive at least part of the display, and termination of display of the first viewer private content based, at least in part, on the second viewer being able to visually perceive at least part of the display.

One or more embodiments may provide an apparatus, a computer readable medium, a computer program product, and/or a non-transitory computer readable medium having means for receipt of information indicative of a first viewer being able to visually perceive at least part of a display and information indicative of a second viewer being able to visually perceive at least part of the display, means for determination of first viewer private content associated with the first viewer, means for receipt of information indicative of the second viewer being unable to visually perceive at least part of the display, means for causation of display of the first viewer private content based, at least in part, on the second viewer being unable to visually perceive at least part of the display, means for receipt of information indicative of the second viewer being able to visually perceive at least part of the display, and means for termination of display of the first viewer private content based, at least in part, on the second viewer being able to visually perceive at least part of the display.

An apparatus comprising at least one processor and at least one memory, the memory comprising machine-readable instructions, that when executed cause the apparatus to perform receipt of information indicative of a first viewer being able to visually perceive at least part of a display and information indicative of a second viewer being able to visually perceive at least part of the display, determination of first viewer private content associated with the first viewer, receipt of information indicative of the second viewer being unable to visually perceive at least part of the display, causation of display of the first viewer private content based, at least in part, on the second viewer being unable to visually perceive at least part of the display, receipt of information indicative of the second viewer being able to visually perceive at least part of the display, and termination of display of the first viewer private content based, at least in part, on the second viewer being able to visually perceive at least part of the display.

In at least one example embodiment, the information indicative of the second viewer being unable to visually perceive at least part of the display comprises information indicative of the second viewer being unable to visually perceive a particular part of the display and causation of display of the first viewer private content is performed such that the first viewer private content is displayed within the particular part of the display.

In at least one example embodiment, the information indicative of the second viewer being able to visually perceive at least part of the display comprises information indicative of the second viewer being able to visually perceive the particular part of the display and termination of display of the first viewer private content is based, at least in part, on the second viewer being able to visually perceive the particular part of the display.

In at least one example embodiment, the information indicative of the first viewer being able to visually perceive at least part of the display is visual information received from at least one camera module.

In at least one example embodiment, the at least one camera module is facing a direction that is common to a direction faced by the display.

In at least one example embodiment, the information indicative of the first viewer being able to visually perceive at least part of the display is electro-oculographical information received from at least one electro-oculographical sensor.

In at least one example embodiment, the electro-oculographical sensor is comprised by a wearable apparatus worn by the first viewer and the receipt of the electro-oculographical information from the electro-oculographical sensor comprises receipt of the electro-oculographical information from the wearable apparatus.

In at least one example embodiment, the information indicative of the second viewer being able to visually perceive at least part of the display is visual information received from at least one camera module.

In at least one example embodiment, the information indicative of the second viewer being able to visually perceive at least part of the display is electro-oculographical information received from at least one electro-oculographical sensor.

In at least one example embodiment, the electro-oculographical sensor is comprised by a wearable apparatus worn by the second viewer and the receipt of the electro-oculographical information from the electro-oculographical sensor comprises receipt of the electro-oculographical information from the wearable apparatus.

In at least one example embodiment, the first viewer private content is content designated for display to the first viewer and avoidance of display to the second viewer.

In at least one example embodiment, determination of first viewer private content associated with the first viewer comprises, determination of a first viewer identity of the first viewer, based, at least in part, on the information indicative of the first viewer being able to visually perceive at least part of a display, and determination of first viewer private content based, at least in part, on the first viewer identity.

In at least one example embodiment, determination of the first viewer private content comprises receipt of content, and determination that the content is the first viewer private content based, at least in part, on the first viewer identity.

In at least one example embodiment, determination that the content is first viewer private content comprises receipt of a content privacy policy associated with the first viewer identity, wherein the determination the content is the first viewer private content is based, at least in part, on the content privacy policy.

In at least one example embodiment, the content privacy policy is a data structure that designates particular content as private content.

In at least one example embodiment, the information indicative of the second viewer being unable to visually perceive at least part of the display is visual information received from at least one camera module.

In at least one example embodiment, the information indicative of the second viewer being unable to visually perceive at least part of the display is electro-oculographical information received from at least one electro-oculographical sensor.

One or more example embodiments further perform determination that the second viewer is unable to visually perceive at least part of the display is based, at least in part, on the information indicative of the second viewer being unable to visually perceive at least part of the display.

In at least one example embodiment, information indicative of the second viewer being unable to visually perceive at least part of the display comprises information indicative of the second viewer having closed eyes.

In at least one example embodiment, the determination that the second viewer is unable to visually perceive at least part of the display comprises determination that the second viewer has closed eyes based, at least in part, on the information indicative of the second viewer having closed eyes.

In at least one example embodiment, information indicative of the second viewer being unable to visually perceive at least part of the display comprises information indicative of the second viewer performing saccadic eye movement.

In at least one example embodiment, the determination that the second viewer is unable to visually perceive at least part of the display comprises determination that the second viewer is performing saccadic eye movement based, at least in part, on the information indicative of the second viewer performing saccadic eye movement.

In at least one example embodiment, information indicative of the second viewer being unable to visually perceive at least part of the display comprises information indicative of the second viewer being absent.

In at least one example embodiment, the determination that the second viewer is unable to visually perceive at least part of the display comprises determination that the second viewer is absent based, at least in part, on the information indicative of the second viewer being absent.

One or more example embodiments further perform determination that the second viewer is able to visually perceive at least part of the display is based, at least in part, on the information indicative of the second viewer being able to visually perceive at least part of the display.

In at least one example embodiment, information indicative of the second viewer being able to visually perceive at least part of the display comprises information indicative of the second viewer having open eyes.

In at least one example embodiment, the determination that the second viewer is able to visually perceive at least part of the display comprises determination that the second viewer has open eyes based, at least in part, on the information indicative of the second viewer having open eyes.

In at least one example embodiment, information indicative of the second viewer being able to visually perceive at least part of the display comprises information indicative of the second viewer failing to perform saccadic eye movement.

In at least one example embodiment, the determination that the second viewer is able to visually perceive at least part of the display comprises determination that the second viewer is failing to perform saccadic eye movement based, at least in part, on the information indicative of the second viewer failing to perform saccadic eye movement.

In at least one example embodiment, information indicative of the second viewer being able to visually perceive at least part of the display comprises information indicative of the second viewer being present.

In at least one example embodiment, the determination that the second viewer is able to visually perceive at least part of the display comprises determination that the second viewer is present based, at least in part, on the information indicative of the second viewer being present.

In at least one example embodiment, the causation of display of the first viewer private content is further based, at least in part, on the first viewer being able to visually perceive at least part of the display.

One or more example embodiments further perform receipt of information indicative of the first viewer being unable to visually perceive at least part of the display, and preclusion of display the first viewer private content based, at least in part on the first viewer being unable to visually perceive at least part of the display.

One or more example embodiments further perform preclusion of display of first viewer private content based, at least in part, on the second viewer being able to visually perceive at least part of the display.

One or more example embodiments further perform causation of display of non-private content.

In at least one example embodiment, causation of display of the first viewer private content is performed such that the first viewer private content overlays at least part of the non-private content.

In at least one example embodiment, termination of display of the first viewer private content is performed such that the first viewer private content fails to overlay the non-private content.

In at least one example embodiment, termination of display of the first viewer private content is performed such that the non-private content continues to be displayed.

One or more example embodiments further perform determination of a second viewer private content associated with the second viewer, receipt of information indicative of the first viewer being unable to visually perceive at least part of the display, causation of display of the second viewer private content based, at least in part, on the first viewer being unable to visually perceive at least part of the display, receipt of information indicative of the first viewer being able to visually perceive at least part of the display, and termination of display of the second viewer private content based, at least in part, on the first viewer being able to visually perceive at least part of the display.

In at least one example embodiment, the causation of display of the second viewer private content is further based, at least in part, on the second viewer being able to visually perceive at least part of the display.

One or more example embodiments further perform receipt of information indicative of the second viewer being unable to visually perceive at least part of the display, and preclusion of display the second viewer private content based, at least in part on the second viewer being unable to visually perceive at least part of the display.

### BRIEF DESCRIPTION OF THE DRAWINGS

For a more complete understanding of embodiments of the invention, reference is now made to the following descriptions taken in connection with the accompanying drawings in which:
FIGURE 1 is a block diagram showing an apparatus according to at least one example embodiment;
FIGURES 2A-2D are diagrams illustrating display of content according to at least one example embodiment;
FIGURE 3 is a diagram illustrating saccadic eye movement according to at least one example embodiment;
FIGURES 4A-4B are diagrams illustrating receipt of viewer information according to at least one example embodiment;
FIGURE 5 is a flow diagram illustrating activities associated with display of private content according to at least one example embodiment;
FIGURE 6 is a flow diagram illustrating activities associated with preclusion of display of private content according to at least one example embodiment;
FIGURE 7 is a flow diagram illustrating activities associated with display of non-private content according to at least one example embodiment; and
FIGURE 8 is a flow diagram illustrating activities associated with display of private content according to at least one example embodiment.

### DETAILED DESCRIPTION OF THE DRAWINGS

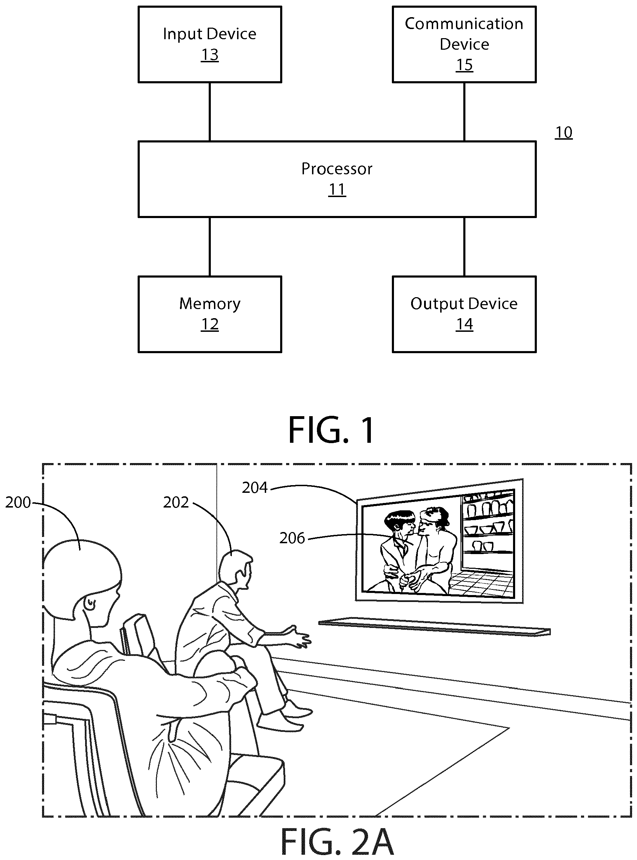

An embodiment of the invention and its potential advantages are understood by referring to FIGURES 1 through 8 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a personal digital assistant (PDAs), a pager, a mobile computer, a desktop computer, a television, a monitor, a display, a gaming apparatus, a laptop computer, a tablet computer, a media player, a head mounted display, a near eye display, a see-through display, a camera, a video recorder, a mobile phone, a global positioning system (GPS) apparatus, an automobile, a kiosk, an electronic table, a robot, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, a surveillance device, a home automation or control device, and/or the like.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus, and/or the like. For example, the apparatus may send the information to a separate display, to a computer, to a laptop, to a mobile apparatus, and/or the like. For example, the apparatus may be a server that causes display of the information by way of sending the information to a client apparatus that displays the information. In this manner, causation of display of the information may comprise sending one or more messages to the separate apparatus that comprise the information, streaming the information to the separate apparatus, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition, or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display, or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

FIGURES 2A-2D are diagrams illustrating display of content according to at least one example embodiment. The examples of FIGURES 2A-2D are merely examples and do not limit the scope of the claims. For example, the type of content may vary, the source of the content may vary, the display may vary, and/or the like.

In many circumstances, individuals may desire to view information by way of a display, such as a television, a monitor, and/or the like. For example, an individual may watch television programs, motion pictures, and/or the like. Oftentimes, when an apparatus comprises a display, the display may be viewable by multiple viewers. A viewer may refer to a person, an animal, an apparatus, a capture device, and/or the like positioned such that visual perception of at least part of content displayed on a display is possible by the viewer. For example, a viewer of a display may be able to visually perceive content displayed on the display when the viewer is seated in front of the display, whereas a viewer may be unable to perceive content displayed on the display when standing behind the display, the viewer is located in a separate room from the display, and/or the like. In the context of a display, content may refer to visual information, moving images, graphics, colors, symbols, video, pictures, photographs, and/or the like displayed on a display. Content may be received from a separate apparatus, retrieved from memory, and/or the like. For example, the apparatus may display a video stored in local memory, receive and cause display of a live television signal by way of an antenna, receive and cause display of a video signal by way of a cable television provider, and/or the like, playback video from a video player (e.g. a DVD player, a VHS cassette player, a Blu-Ray player, etc.), receive streaming content from a public data network such as the Internet, and/or the like.

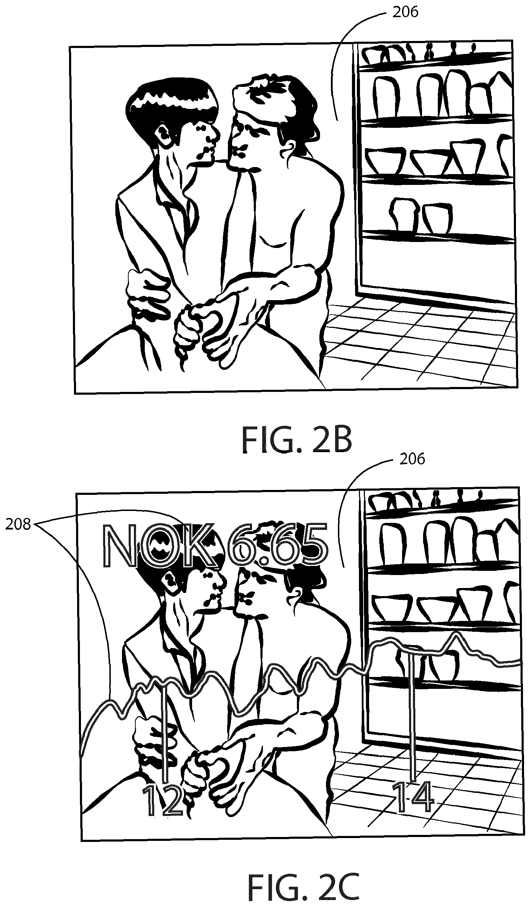

The example of FIGURE 2A illustrates a first viewer 200 and a second viewer 202. In the example of FIGURE 2A, first viewer 200 and second viewer 202 are viewers of display 204. In the example of figure 2A, display 204 is displaying content 206. The example of FIGURE 2B illustrates content 206.

In some circumstances, content displayed by a displayed may be intended to be viewable by any viewer. For example, the content may be a motion picture, a group presentation, a live television broadcast, and/or the like. For example, content 206 of FIGURE 2A may be a television broadcast intended to be viewable by any viewer. Content intended to be viewable by any viewer may be referred to as non-private content. In at least on example embodiment, an apparatus causes display of non-private content.

In some circumstances, content displayed by a displayed may be intended to be viewable by single viewer. For example, the content may be a private message, a personalized message, a status update, a financial record, and/or the like. Content intended to be viewable by a particular viewer, a particular plurality of viewers, and/or the like may be referred to as private content. For example, private content may be content designated for display to a particular viewer, designated for avoidance of display for other viewers, and/or the like. For instance, in the example of FIGURE 2A, first viewer private content may be designated for display to first viewer 200, and designated for avoidance of display to second viewer 202. It should be understood that private content may comprise non-confidential content. For example, private content may comprise a sports score for a favorite sports team of a viewer, a news ticker, a stock quote, and/or the like. In this manner, the private content may be any information that the designated viewer desires to perceive, that the designated view desires to avoid having other viewers perceive, and/or the like. In at least one example embodiment, an apparatus causes display of private content.

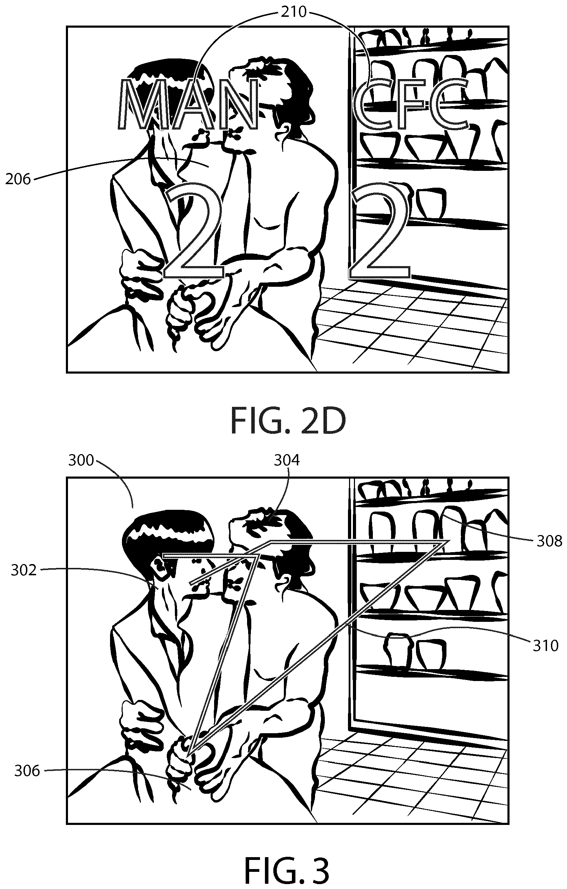

In many circumstances, a viewer may be watching non-private content, such as a television program, and desire to perceive private content. In such circumstances, it may be desirable to cause display of the private content such that the private content and at least a portion of the non-private content are simultaneously viewable by the viewer. In some circumstances, a display may display a non-private content simultaneously with private content. For example, a display may superimpose a stock ticker, a sports score, and/or the like over a television broadcast, a motion picture, and/or the like. The example of FIGURE 2C illustrates content 208 overlaying content 206. In the context of a display, overlaying of content may refer to displaying of a first content such that it obscures at least a portion of a second content. The example of FIGURE 2D illustrates content 210 overlaying content 206. In the example of FIGURES 2C-2D, it should be understood that content 206 is non-private content. In the example of FIGURE 2C, it should be understood that content 208 is private content. Even though content 208 is illustrated as a stock chart, it should be understood that content 208 may be any type of content. In the example of FIGURE 2D, it should be understood that content 210 is private content. Even though content 210 is illustrated as a sports score, it should be understood that content 210 may be any type of content. In at least one example embodiment, display of private content is performed such that the private content overlays at least part of non-private content.

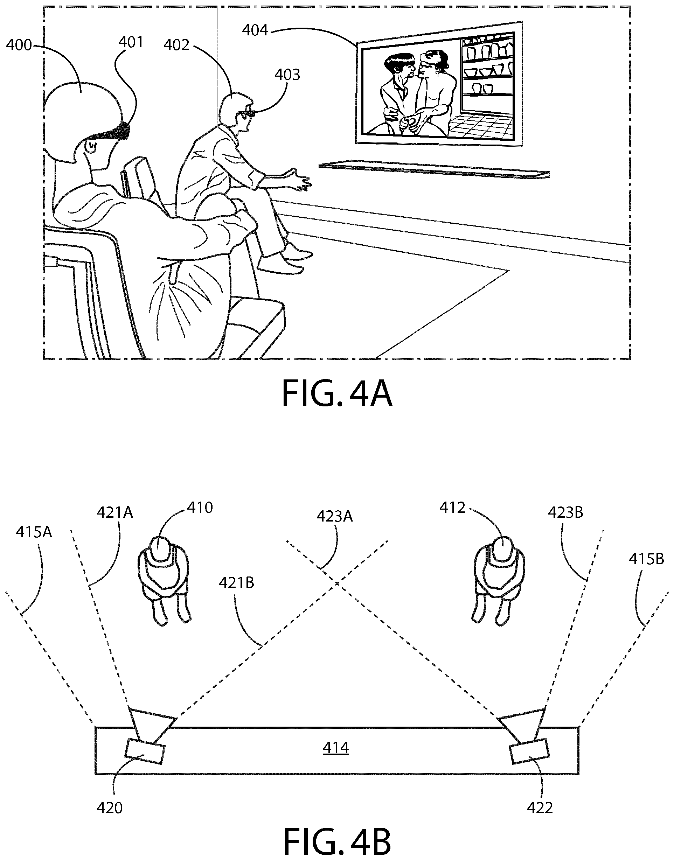

In some circumstances, when a viewer is positioned in front of a display, the viewer may be unable to visually perceive content displayed on the display. For example, the viewer may have closed eyes, the viewer may have their view obscured by another object, and/or the like. In circumstances such as these, it may be desirable to determine when the viewer is unable to visually perceive the display, when the viewer is able to visually perceive the display, and/or the like. For example, in circumstances where the viewer is unable to visually perceive the display, the display may display generic content, go into a standby mode, and/or the like. In circumstances where the viewer is able to visually perceive the display, the display may resume from a standby mode, display content intended for the viewer, and/or the like. Determination that a viewer is able to visually perceive a display may be based on information received from a separate apparatus, a determination made by the apparatus, and/or the like. For example, the apparatus may receive information indicative of a viewer being able to visually perceive at least part of the display from a camera module, from an image sensor, from viewer feedback, and/or the like. Various examples of how an apparatus may receive information indicative of a viewer being able to visually perceive at least part of a display are described with regards to FIGURE 3 and FIGURES 4A-4B. However, it should be understood that there are many manners in which an apparatus may receive such information, and many more will likely be developed in the future. As such, the manner in which the apparatus determines whether a viewer is able to visually perceive at least part of a display does not necessarily limit the scope of the claims. For example, the embodiments of the invention described regarding the examples of FIGURE 3 and FIGURES 4A-4B are merely examples, and do not necessarily limit the scope of the claims. In at least one example embodiment, determination that a viewer is unable to visually perceive at least part of the display is based, at least in part, on information indicative of the viewer being unable to visually perceive at least part of the display. In at least one example embodiment, determination that a viewer is able to visually perceive at least part of the display is based, at least in part, on information indicative of the viewer being able to visually perceive at least part of the display.

As previously described, an apparatus may receive information indicative of a viewer being able to visually perceive at least part of a display. For example, display 204 of FIGURE 2A may receive information indicative of first viewer 200 and/or second viewer 202 being able to visually perceive at least part of display 204. In at least one example embodiment, an apparatus receives information indicative of a viewer being able to visually perceive at least part of a display.

As previously described, an apparatus may receive information indicative of a viewer being unable to visually perceive at least part of a display. For example, display 204 of FIGURE 2A may receive information indicative of first viewer 200 and/or second viewer 202 being unable to visually perceive at least part of display 204. In at least one example embodiment, an apparatus receives information indicative of a viewer being unable to visually perceive at least part of a display.

As previously described, in some circumstances a viewer may be able to visually perceive at least a part of a display. In circumstances such as these, it may be desirable to display content on the display. For example, the display may be kept in a standby mode prior to being viewed, and viewing the display may trigger display of content. In at least one example embodiment, an apparatus causes display of content based, at least in part, on a viewer being able to visually perceive at least part of the display. For example, display 204 of FIGURE 2A may cause display of content 206 based, at least in part, on first viewer 200 and/or second viewer 202 being able to visually perceive at least part of display 204. In at least one example embodiment, an apparatus causes display of content in response to a viewer being able to visually perceive at least part of the display.

As previously described, in some circumstances a viewer may be unable to visually perceive at least a part of a display. In circumstances such as these, it may be desirable to terminate display of content on the display. For example, terminating display of content may conserve power, may prevent sensitive information from being conveyed, and/or the like. In at least one example embodiment, an apparatus causes termination of display of content based, at least in part, on a viewer being unable to visually perceive at least part of a display. For example, display 204 of FIGURE 2A may terminate display of content 206 based, at least in part, on first viewer 200 and/or second viewer 202 being unable to visually perceive at least part of display 204. In at least one example embodiment, an apparatus causes termination of display of content in response to a viewer being unable to visually perceive at least part of a display.

As previously described, in some circumstances, a display may display private content. In circumstances such as these, it may be desirable to determine that the private content is associated with a particular viewer and/or viewers. In this manner, display of the private content to a viewers that are not associated with the private content. For example, content 208 of FIGURE 2C may be first viewer private content associated with first viewer 200 of FIGURE 2A, and content 210 of FIGURE 2D may be second viewer private content associated with second viewer 202 of FIGURE 2A. In this example, display 206 of FIGURE 2A may avoid displaying content 208 to second viewer 202, and display 206 may avoid displaying content 210 to first viewer 200 based, at least in part, on content 208 and 210 being private content associated with particular viewers. In at least one example embodiment, an apparatus determines private content associated with a particular viewer and/or a particular plurality of viewers.

In some circumstances, in order to facilitate access to an apparatus, a viewer of a display associated with of the apparatus may have a viewer identity. A viewer identity may refer to an identifying characteristic of a viewer, such as a credential, a biometric feature, and/or the like. For example, a viewer may log onto a device associated with the display with a username and password, an image and/or depth sensor or a microphone associated with the display may recognize the identity of the viewer based on physical characteristics, and/or the like. In circumstances such as these, it may be desirable for the apparatus to determine the identity of a viewer. For example, the identity of a particular viewer may be useful for determining private content is associated with that particular viewer. In at least one example embodiment, an apparatus determines content is particular viewer private content based, at least in part, on the identity of a particular viewer. For example, display 204 of FIGURE 2A may determine that first viewer 200 of FIGURE 2A has a first viewer identity, and display 204 may determine that content 208 of FIGURE 2C is first viewer private content associated with first viewer 200 based, at least in part, on the first viewer identity of first viewer 200.

In some circumstances, in order to facilitate display of private content, it may be desirable for the private content to be associated with a content privacy policy. A content privacy policy may refer to a data structure that designates particular content as private content, associates viewers with particular private content, and/or the like. For example, a privacy policy may designate content as private content based on previous designations of similar content, designations based on viewer preferences, designations comprised by viewer identities, control setting controlled by viewers and/or content administrators, association with account information such as a social network account of a particular person, and/or the like. In circumstances such as these, it may be desirable to determine that content is private content based, at least in part, on receipt of a content privacy policy. For example, an apparatus may receive a content privacy policy prior to receipt of content, simultaneous with receipt of the content, and/or the like. In at least one example embodiment, determination that content is private content associated with a particular viewer and/or a particular plurality of viewers comprises receipt of a content privacy policy associated with a viewer identity of the particular viewer and/or the particular plurality of viewers. In this manner, the determination that the content is private content may be based, at least in part, on the content privacy policy.

As previously described, in some circumstances, a display may display private content. In circumstances such as these, it may be desirable to limit display of the private content to circumstances where a particular viewer is unable to perceive the content. For example, the viewer may leave the room, may fall asleep, may blink, may look away from the display, and/or the like. For example, in circumstances where content 208 of FIGURE 2C is first viewer private content associated with first viewer 200 of FIGURE 2A, it may be desirable to limit display of content 208 to circumstances where second viewer 202 of FIGURE 2A is unable to visually perceive at least part of display 204 of FIGURE 2A. In this manner, viewer 202 may be unable to view content 208. Similarly, in circumstances where content 210 of FIGURE 2D is second viewer private content associated with second viewer 202, it may be desirable to limit display of content 210 to circumstances where first viewer 200 is unable to visually perceive at least part of display 204. In this manner, viewer 200 may be unable to view content 210. In at least one example embodiment, causation of display of a first viewer private content is based, at least in part, on a second viewer being unable to visually perceive, at least part of, the display. In at least one example embodiment, causation of display of a first viewer private content is in response to a second viewer being unable to visually perceive, at least part of, the display.

In some circumstances, a particular viewer unassociated with private content may begin viewing a display while the private content is displayed on a display. For example, the viewer may enter the room, may awake, may stop blinking, may resume looking toward the display, and/or the like. In circumstances such as these, it may be desirable to terminate display of private content. For example, in circumstances where content 208 of FIGURE 2C is associated with first viewer 200 of FIGURE 2A, and content 208 is displayed on display 204 of FIGURE 2A, second viewer 202 FIGURE 2A may begin viewing at least a portion of display 204. In circumstances such as these, it may be desirable to terminate display of the private content. In this manner, second viewer 200 may be unable to view the private content. In at least one example embodiment, an apparatus terminates display of private content. In at least one example embodiment, an apparatus terminates display of a first viewer private content based, at least in part, on a second viewer being able to visually perceive at least part of a display. In at least one example embodiment, an apparatus terminates display of a first viewer private content in response to a second viewer being able to visually perceive at least part of a display.

As previously described, in some circumstances a display may display non-private content simultaneously with private content. In circumstances where it is desirable to terminate display of the private content, it may be desirable to continue display of the non-private content. For example, multiple viewers may desire to view the non-private content when display of the private content is terminated. In at least one example embodiment, termination of display of private content is performed such that non-private content continues to be displayed. In at least one example embodiment, termination of display of private content is performed such that the private content fails to overlay non-private content.

FIGURE 3 is a diagram illustrating saccadic eye movement according to at least one example embodiment. The example of FIGURE 3 is merely an example and does not limit the scope of the claims. For example, the type of movement may vary, the amount of movement may vary, the number of movements may vary, and/or the like.

As previously described, in some circumstances, an apparatus may receive information indicative of a viewer being able to visually perceive at least a part of a display. For example, the information may indicate that the viewer may be able to visually perceive the entirety of the display, a portion of the display, a particular region of the display, and/or the like. In some circumstances, a viewer may be able to visually perceive at least a part of a display because the viewer has unobscured vision, open eyes, and/or the like. In circumstances such as these, it may be desirable for the apparatus to determine the viewer is able to visually perceive at least part of a display based, at least in part, on the viewer having unobscured vision. In at least one example embodiment, information indicative of a viewer being able to visually perceive at least part of a display comprises information indicative of the viewer having open eyes. For example, the apparatus may receive information from a gaze tracking camera indicative of the viewer having open eyes. In at least one example embodiment, determination the viewer is able to visually perceive at least a part of the display comprises determination that the viewer has open eyes based, at least in part, on information indicative of the viewer having open eyes. In at least one example embodiment, information indicative of a viewer being unable to visually perceive at least part of a display comprises information indicative of the viewer having at least partially unobscured vision.

As previously described, in some circumstances, an apparatus may receive information indicative of a viewer being unable to visually perceive at least a part of a display. For example, the information may indicate that the viewer may be unable to visually perceive the entirety of the display, a portion of the display, a particular region of the display, and/or the like. In some circumstances, a viewer may be unable to visually perceive at least a part of a display because the viewer has obscured vision, closed eyes, and/or the like. For example, the viewer may be asleep, the viewer may be blinking, the viewer may be reading a book, the viewer may be looking in a direction other than a direction facing the display, and/or the like. In circumstances such as these, it may be desirable for the apparatus to determine the viewer is unable to visually perceive at least part of a display based, at least in part, on the viewer having obscured vision. In at least one example embodiment, information indicative of a viewer being unable to visually perceive at least part of a display comprises information indicative of the viewer having closed eyes. For example, the apparatus may receive information from a gaze tracking camera indicative of the viewer having closed eyes. In at least one example embodiment, determination the viewer is unable to visually perceive at least a part of the display comprises determination that the viewer has closed eyes based, at least in part, on information indicative of the viewer having closed eyes. In at least one example embodiment, information indicative of a viewer being unable to visually perceive at least part of a display comprises information indicative of the viewer having obscured vision.

In some circumstances, a viewer may be unable to visually perceive at least part of the display because the viewer is absent. For example, viewer 200 of FIGURE 2A may leave the vicinity of display 204 such that they are unable to view display 204. In circumstances such as these, display 204 may determine that viewer 200 is absent. For example, a camera associated with apparatus 204 may be unable to detect viewer 200 as being present. In at least one example embodiment, information indicative of a viewer being unable to visually perceive at least part of a display comprises information indicative of the viewer being absent. In at least one example embodiment, determination that a viewer is unable to visually perceive at least part of the display comprises determination that the viewer is absent based, at least in part, on the information indicative of the viewer being absent.

In many circumstances, humans and other animals do not view scenes, objects, and/or the like, such as displays, with a fixed eye position. Rather, the eyes rapidly move to locate disparate parts of a scene, an object, and/or the like and compose up a mental, three-dimensional "map" corresponding to the scene, the object, and/or the like. Rapid movements of the eyes in this fashion may be referred to as saccades. Similarly, the motion of the eyes when performing a saccade may be referred to as saccadic eye movement.

The example of FIGURE 3 illustrates saccadic eye movement. In the example of FIGURE 3, a scene 300 comprised by first person 302, second person 304, first object 306, and second object 308. When viewing scene 300, a viewer's eyes may rapidly move with saccadic eye movements corresponding to visual path 310. For example, a person may rapidly scan with their from first person 302 to second person 304, then scan to object 306, followed by object 308, back to second person 304 and finally end with their eyes positioned on first person 302.

Because saccades are rapid movements of the eye, blurring of an image on the retina of the eye occurs. In many circumstances, during saccades, humans and other animals may selectively block visual processing during the saccadic eye movements. This phenomenon may be referred to as saccadic masking. Two major types of saccadic masking are flash suppression, where a flash of light is unable to be seen during a saccade, and saccadic suppression of image displacement, where there is an inability to perceive whether an object has moved during a saccade. In this manner, human visual perception is significantly reduced during a saccade.

In circumstances where a viewer is performing a saccade, the viewer may be unable to perceive at least at least part of the display, at least a part of content on a display, and/or the like. In at least one example embodiment, information indicative of a viewer being unable to visually perceive at least part of a display comprises information indicative of the second viewer performing saccadic eye movement. For example, a gaze tracking camera may determine that the viewer is performing saccadic eye movement. In at least one example embodiment, determination that a viewer is unable to visually perceive at least part of a display comprises determination that the viewer is performing saccadic eye movement based, at least in part, on the information indicative of the viewer performing saccadic eye movement.

FIGURES 4A-4B are diagrams illustrating receipt of viewer information according to at least one example embodiment. The examples of FIGURES 4A-4B are merely examples and do not limit the scope of the claims. For example, the number of viewers may vary, the type of viewers may vary, the location of the viewers may vary, and/or the like.

In some circumstances, when viewing a display, a viewer may be wearing a wearable apparatus. For example, the viewer may be wearing 3D shutter glass, a near eye display, a see through display, a head mounted display, and/or the like. The example of FIGURE 4A illustrates first viewer 400 wearing wearable apparatus 401, and second viewer 402 wearing wearable apparatus 403. Even though wearable apparatuses 401 and 403 are illustrated as glasses, it should be understood that apparatuses 401 and 403 may be any type of wearable apparatuses, such as a headband, a neck worn apparatus, a wrist worn apparatus, a monocular head mounted apparatus, and/or the like. In the example of FIGURE 4A, first viewer 400 and second viewer 402 are viewers of display 404.

In some circumstances, a wearable apparatus, such as a near eye display, may comprise an electro-oculographical sensor. An electro-oculographical sensor may refer to a sensor operable to perform electrooculography measurements. For example, a near eye display may comprise electrodes placed above and/or below the eyes to perform electrooculography measurements. Electrooculography may refer to a technique for measuring eye movement, blinking, and/or the like from an electro-oculographical sensor. Such measurements may be referred to as electro-oculographical information. In circumstances where a wearable apparatus comprises an electro-oculographical sensor, the electro-oculographical information may be used to determine if a viewer of a display is unable to visually perceive at least part of the display, is able to visually perceive at least part of a display, and/or the like. For example, the electro-oculographical sensor may determine an eye is moving with saccadic movement, an eye is open, and/or the like. In at least one example embodiment, information indicative of a viewer being able to visually perceive at least part of a display is electro-oculographical information received from at least one electro-oculographical sensor. In at least one example embodiment, information indicative of a viewer being unable to visually perceive at least part of the display is electro-oculographical information received from at least one electro-oculographical sensor. In at least one example embodiment, the electro-oculographical sensor is comprised by a wearable apparatus worn by a viewer. In at least one example embodiment, the receipt of the electro-oculographical information from the electro-oculographical sensor comprises receipt of the electro-oculographical information from the wearable apparatus.

In some circumstances, an apparatus may comprise one or more camera modules, may be in communication with one or more camera modules, may receive visual information from one or more camera modules, and/or the like. In some circumstances, the one or more camera modules may face a direction that is common to a direction faced by a display. A direction faced by a display may refer to a direction from which content displayed by the display may be viewed. For example, a display having a wide viewing able may be considered to face any direction within the viewing angle. In circumstances such as these, an apparatus may be able to determine if a viewer is viewing a display, may be able to identify a particular viewer of the display, and/or the like, based, at least in part, on visual information received from the one or more camera modules.

The example of FIGURE 4B illustrates an overhead view of viewers 410 and 412 viewing display 414. In the example of FIGURE 4B, viewers of display 414 are able to perceive at least a part of display 414 when the viewers are located within the region bounded by display boundary 415A and display boundary 415B. In the example of FIGURE 4B, display 414 comprises camera modules 410 and 422. In the example of FIGURE 4B, camera module 420 has a field of view bounded by field of view boundaries 421A and 421B. In the example of FIGURE 4B, camera module 422 has a field of view bounded by field of view boundaries 423A and 423B. It should be understood that camera modules 420 and 422 face a direction common to the direction faced by display 414. Even though the fields of view of camera modules 420 and 422 are not shown to correspond with display boundaries 415A and 415B, in some circumstances, the fields of views may corresponds with display boundaries of a display, there may be additional camera modules, camera modules with wider viewing angles, camera modules with viewing angle extend outside the display boundaries, and/or the like.

In the example of FIGURE 4B, it can be seen that viewer 410 is located within the field of view of camera module 420. In this manner, display 414 may be able to determine that viewer 410 may be able to view at least a part of display 414, based at least in part on visual information received from camera module 420. Similarly, in the example of FIGURE 4B, it can be seen that viewer 412 is located within the field of view of camera module 422. In this manner, display 414 may be able to determine that viewer 420 may be able to view at least a part of display 414, based at least in part on visual information received from camera module 422. In at least one example embodiment, information indicative of a viewer being able to visually perceive at least part of a display is visual information received from at least one camera module.

In some circumstances, a camera module may be able to determine a viewer is unable to visually perceive at least part of a display. For example, viewer may only be able to view a portion of a large display. For example, a particular portion of display 414 may only be perceivable by a viewer sitting within the field of view of camera module 420, a different particular portion of display 414 may only be perceivable by a viewer sitting within the field of view of camera module 422, and/or the like. For example, display 414 may determine that viewer 412 is unable to view a portion of display 414 that is viewable by viewer 410 from visual information received from camera module 420 and/or camera module 422. In at least one example embodiment, information indicative of a viewer being unable to visually perceive at least part of a display is visual information received from at least one camera module. In at least one example embodiment, information indicative of a viewer being able to visually perceive at least part of a display comprises information indicative of the viewer being able to visually perceive a particular part of the display. In at least one example embodiment, causation of display of content is performed such that the content is displayed within a particular part of the display.

In some circumstances, an apparatus may be able to use information indicative of a viewer being able to perceive at least part of a display to determine a viewer identity of the viewer. For example, if the information indicative of a viewer being able to perceive at least part of a display is visual information, the visual information may comprise identifying characteristics of the viewer that may be used to identify the viewer. In at least one example embodiment, determination of a viewer identity of a viewer is based, at least in part, on information indicative of the viewer being able to visually perceive at least part of a display.

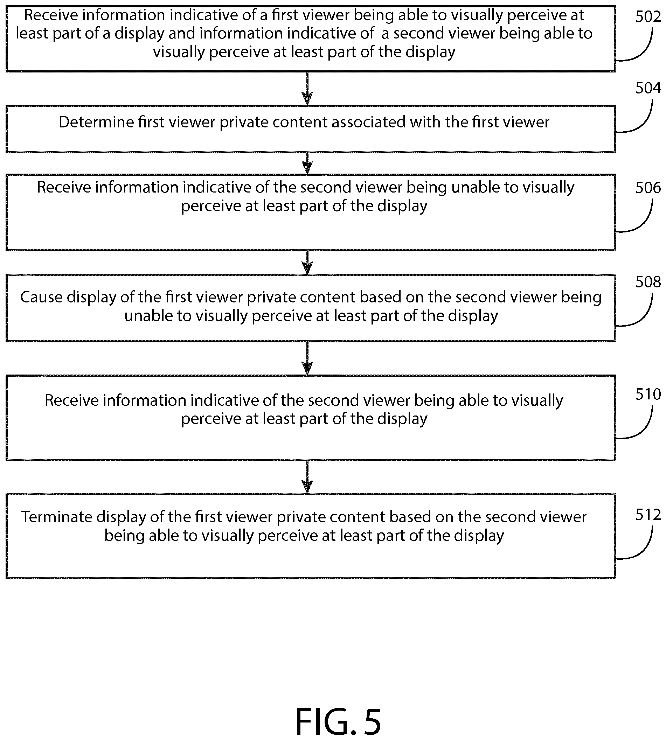

FIGURE 5 is a flow diagram illustrating activities associated with display of private content according to at least one example embodiment. In at least one example embodiment, there is a set of operations that corresponds with the activities of FIGURE 5. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 5.

As previously described, in some circumstances, it may be desirable for a display to display private content.

At block 502, the apparatus receives information indicative of a first viewer being able to visually perceive at least part of a display and information indicative of a second viewer being able to visually perceive at least part of the display. The receipt, the first viewer, the second viewer, the ability to visually perceive, and the display may be similar as described regarding FIGURE 1, FIGURES 2A-2D, FIGURE 3, and FIGURES 4A-4B.

At block 504, the apparatus determines first viewer private content associated with the first viewer. The determination and the private content may be similar as described regarding FIGURES 2A-2D.

At block 506, the apparatus receives information indicative of the second viewer being unable to visually perceive at least part of the display. The receipt and the inability to visually perceive may be similar as described regarding FIGURES 2A-2D, FIGURE 3, and FIGURES 4A-4B.

At block 508, the apparatus causes display of the first viewer private content. The causation of display of the first viewer private content may be based, at least in part, on the second viewer being unable to visually perceive at least part of the display. The display may be similar as described regarding FIGURES 2A-2D.

At block 510, the apparatus receives information indicative of the second viewer being able to visually perceive at least part of the display. The receipt and the ability to visually perceive may be similar as described regarding FIGURES 2A-2D, FIGURE 3, and FIGURES 4A-4B.

At block 512, the apparatus terminates display of the first viewer private content. The termination of display of the first viewer private content may be based, at least in part, on the second viewer being able to visually perceive at least part of the display. The termination may be similar as described regarding FIGURES 2A-2D.

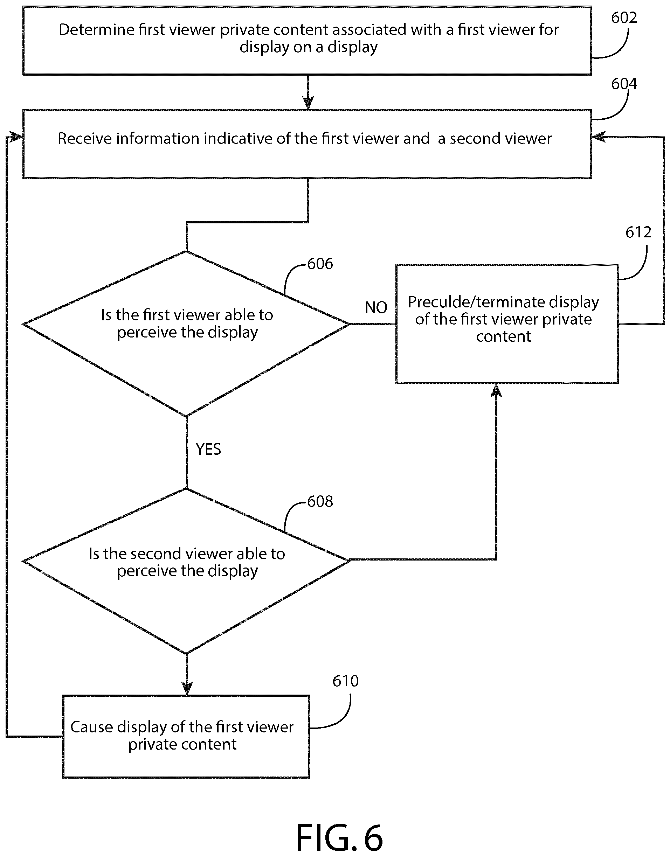

FIGURE 6 is a flow diagram illustrating activities associated with preclusion of display of private content according to at least one example embodiment. In at least one example embodiment, there is a set of operations that corresponds with the activities of FIGURE 6. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 6.

In some circumstances, it may be desirable to preclude display of private content on a display. For example, a viewer associated with the private content may be unable to view at least a portion of the display.

At block 602, the apparatus determines first viewer private content associated with a first viewer for display on a display. The determination, the first viewer, the private content, and the display may be similar as described regarding FIGURE 1 and FIGURES 2A-2D.

At block 604, the apparatus receives information indicative of the first viewer and a second viewer. The receipt and the second viewer may be similar as described regarding FIGURES 2A-2D and FIGURES 4A-4B.

At block 606, the apparatus determines if the first viewer is able to perceive the display. The determination may be based, at least in part, on receipt of information indicative of the first viewer being unable to visually perceive at least part of the display. If the apparatus determines that the first viewer is s able to perceive the display, flow proceeds to block 608 of FIGURE 6. If the apparatus determines that the first viewer is s unable to perceive the display, flow proceeds to block 612 of FIGURE 6. The determination and the ability to visually perceive may be similar as described regarding FIGURES 2A-2D, FIGURE 3, and FIGURES 4A-4B.

At block 608, the apparatus determines if the second viewer is able to perceive the display. The determination may be based, at least in part, on receipt of information indicative of the second viewer being unable to visually perceive at least part of the display. If the apparatus determines that the second viewer is s able to perceive the display, flow proceeds to block 612 of FIGURE 6. If the apparatus determines that the second viewer is unable to perceive the display, flow proceeds to block 610 of FIGURE 6. The determination and the ability to visually perceive may be similar as described regarding FIGURES 2A-2D, FIGURE 3, and FIGURES 4A-4B.

At block 610, the apparatus causes display of the first viewer private content. The causation of display of the first viewer private content may be based, at least in part, on the first viewer being able to visually perceive at least part of the display. The causation of display of the first viewer private content may be based, at least in part, on the second viewer being unable to visually perceive at least part of the display. The display may be similar as described regarding FIGURES 2A-2D.

At block 612, the apparatus precludes and/or terminates display of the first viewer private content. The termination and/or the preclusion of display of the first viewer private content may be based, at least in part on the first viewer being unable to visually perceive at least part of the display. The termination and/or the preclusion of display of the first viewer private content may be based, at least in part, on the second viewer being able to visually perceive at least part of the display. The termination and the preclusion may be similar as described regarding FIGURES 2A-2D.

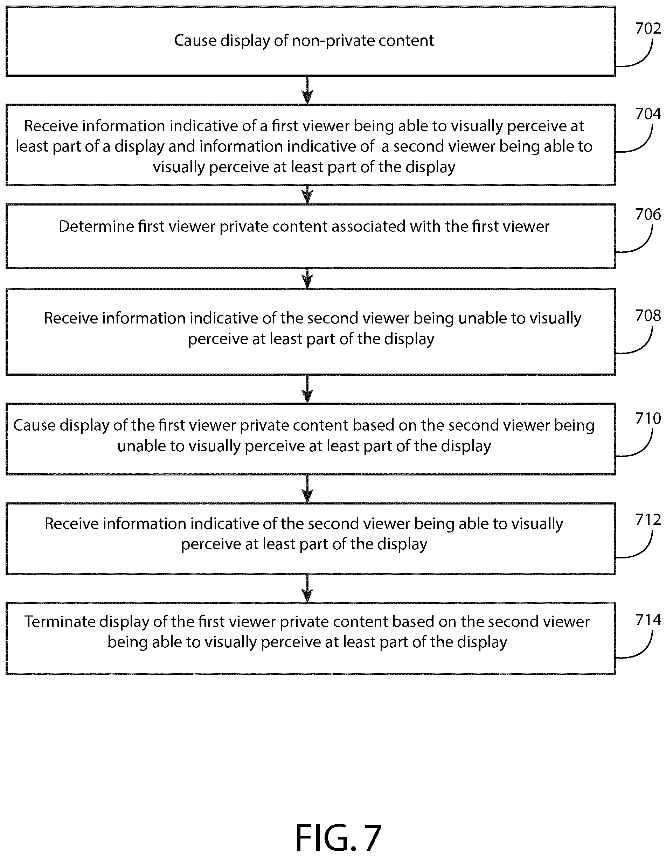

FIGURE 7 is a flow diagram illustrating activities associated with display of non-private content according to at least one example embodiment. In at least one example embodiment, there is a set of operations that corresponds with the activities of FIGURE 7. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

As previously described, in some circumstances it may be desirable to display non-private content.

At block 702, the apparatus causes display, on a display, of non-private content. The display and the non-private content may be similar as described regarding FIGURE 1 and FIGURES 2A-2D.

At block 704, the apparatus the apparatus receives information indicative of a first viewer being able to visually perceive at least part of a display and information indicative of a second viewer being able to visually perceive at least part of the display, similarly as described regarding block 502 of FIGURE 5. At block 706, the apparatus determines first viewer private content associated with the first viewer, similarly as described regarding block 504 of FIGURE 5. At block 708, the apparatus receives information indicative of the second viewer being unable to visually perceive at least part of the display, similarly as described regarding block 506 of FIGURE 5. At block 710, the apparatus causes display of the first viewer private content based, at least in part, on the second viewer being unable to visually perceive at least part of the display, similarly as described regarding block 508 of FIGURE 5. At block 712, the apparatus receives information indicative of the second viewer being able to visually perceive at least part of the display, similarly as described regarding block 510 of FIGURE 5. At block 714, the apparatus the apparatus terminates display of the first viewer private content based, at least in part, on the second viewer being able to visually perceive at least part of the display, similarly as described regarding block 512 of FIGURE 5.

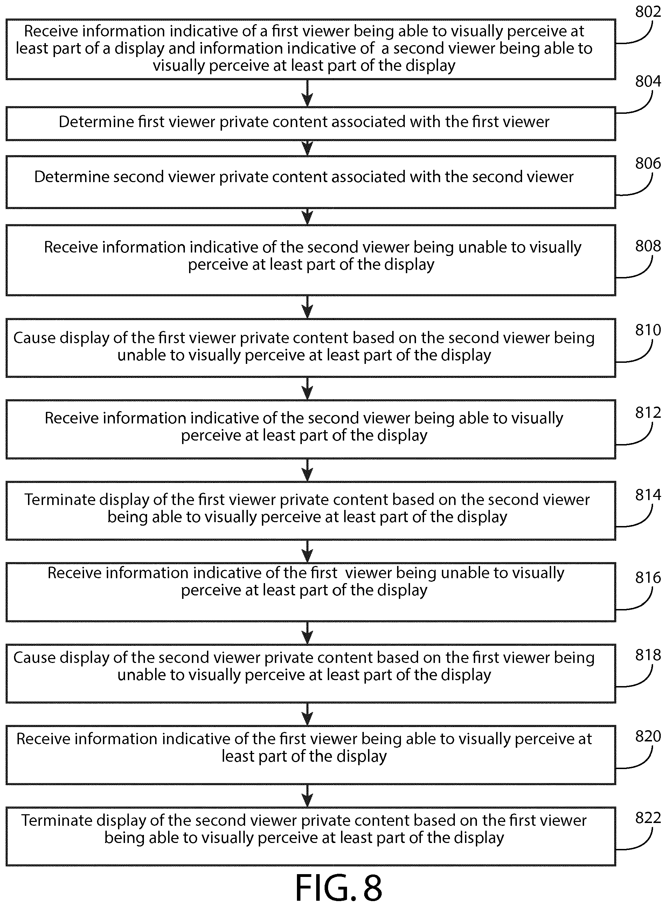

FIGURE 8 is a flow diagram illustrating activities associated with display of private content according to at least one example embodiment. In at least one example embodiment, there is a set of operations that corresponds with the activities of FIGURE 8. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 8.

As previously described, in some circumstances particular private content may be associated with a particular viewer, and different private content may be associated with a different viewer. As previously described, in circumstances such as these, it may be desirable to limit display of the private content to circumstances where it may only be viewed by viewers associated with the private content.

At block 802, the apparatus the apparatus receives information indicative of a first viewer being able to visually perceive at least part of a display and information indicative of a second viewer being able to visually perceive at least part of the display, similarly as described regarding block 502 of FIGURE 5. At block 804, the apparatus determines second viewer private content associated with the second viewer. The determination and the private content may be similar as described regarding FIGURES 2A-2D.

At block 806, the apparatus determines first viewer private content associated with the first viewer, similarly as described regarding block 504 of FIGURE 5. At block 808, the apparatus receives information indicative of the second viewer being unable to visually perceive at least part of the display, similarly as described regarding block 506 of FIGURE 5. At block 810, the apparatus causes display of the first viewer private content based, at least in part, on the second viewer being unable to visually perceive at least part of the display, similarly as described regarding block 508 of FIGURE 5. At block 812, the apparatus receives information indicative of the second viewer being able to visually perceive at least part of the display, similarly as described regarding block 510 of FIGURE 5. At block 814, the apparatus the apparatus terminates display of the first viewer private content based, at least in part, on the second viewer being able to visually perceive at least part of the display, similarly as described regarding block 512 of FIGURE 5.

At block 816, the apparatus receives information indicative of the first viewer being unable to visually perceive at least part of the display. The receipt and the inability to visually perceive may be similar as described regarding FIGURES 2A-2D, FIGURE 3, and FIGURES 4A-4B.

At block 818, the apparatus causes display of the second viewer private content. The causation of display of the second viewer private content may be based, at least in part, on the first viewer being unable to visually perceive at least part of the display. The display may be similar as described regarding FIGURES 2A-2D.

At block 820, the apparatus receives information indicative of the first viewer being able to visually perceive at least part of the display. The receipt and the ability to visually perceive may be similar as described regarding FIGURES 2A-2D, FIGURE 3, and FIGURES 4A-4B.

At block 822, the apparatus terminates display of the second viewer private content. The termination of display of the second viewer private content may be based, at least in part, on the first viewer being able to visually perceive at least part of the display. The termination may be similar as described regarding FIGURES 2A-2D.

Embodiments of the invention may be implemented in software, hardware, application logic or a combination of software, hardware, and application logic. The software, application logic, and/or hardware may reside on the apparatus, a separate device, or a plurality of separate devices. If desired, part of the software, application logic, and/or hardware may reside on the apparatus, part of the software, application logic and/or hardware may reside on a separate device, and part of the software, application logic, and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 804 of FIGURE 8 may be performed after block 806 of FIGURE 8. Furthermore, if desired, one or more of the above-described functions may be optional or may be combined. For example, block 804 of FIGURE 8 may be optional and/or combined with block 806 of FIGURE 8.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method comprising:
receiving information indicative of a first viewer (200) being able to visually perceive a display (204) and information indicative of a second viewer (202) being able to visually perceive the display (204);
determining first viewer private content (208) associated with the first viewer (200);
receiving information indicative of the second viewer (202) being unable to visually perceive the display (204), wherein a gaze tracking camera determines that the second viewer is performing saccadic eye movement and the information indicative of the second viewer being unable to visually perceive the display is determined based on the determination that the second viewer is performing saccadic eye movement;
causing display (204) of the first viewer private content (208) such that the first viewer private content (208) is displayed within the display (204) based, at least in part, on the second viewer (202) being unable to visually perceive the display (204);
receiving information indicative of the second viewer (202) being able to visually perceive the display (204); and
terminating display (204) of the first viewer private content (208) based, at least in part, on the second viewer (202) being able to visually perceive the display (204).

2. The method of claim 1, wherein the causation of display of the first viewer private content (208) is further based, at least in part, on the first viewer (200) being able to visually perceive the display (204).

3. The method of any of claims 1-2, further comprising causing display of non-private content (206).

4. The method of any previous claim, wherein the gaze tracking camera is facing a direction that is common to a direction faced by the display (204).

5. An apparatus (10) comprising
means for receiving information indicative of a first viewer (200) being able to visually perceive a display (204) and information indicative of a second viewer (202) being able to visually perceive the display (204);
means for determining first viewer private content (208) associated with the first viewer (200);
means for receiving information indicative of the second viewer (202) being unable to visually perceive the display (204), wherein a gaze tracking camera determines that the second viewer is performing saccadic eye movement and the information indicative of the second viewer being unable to visually perceive the display is determined based on the determination that the second viewer is performing saccadic eye movement;
means for causing display (204) of the first viewer private content (208) such that the first viewer private content (208) is displayed within the display (204) based, at least in part, on the second viewer (202) being unable to visually perceive the display (204);
means for receiving information indicative of the second viewer (202) being able to visually perceive the display (204); and
means for terminating display (204) of the first viewer private content (208) based, at least in part, on the second viewer (202) being able to visually perceive the display (204).

6. The apparatus of claim 5 wherein the causation of display of the first viewer private content (208) is further based, at least in part, on the first viewer (200) being able to visually perceive at least part of the display (204).

7. The apparatus of any of claims 5-6, further comprising causing display of non-private content (206).

8. The apparatus of any of claims 5-7, wherein the gaze tracking camera is facing a direction that is common to a direction faced by the display (204).

9. The apparatus (10) of Claim 5, wherein the means for performing the method comprise at least one processor (11) and at least one memory (12), the memory comprising machine-readable instructions, that when executed cause the apparatus to perform the method of any of claims 1-4.

10. At least one computer readable medium comprising instructions that, when executed on an apparatus of claim 5, perform the method of any of claims 1-4.

## Patentansprüche

1. Verfahren, umfassend:
Empfangen von Informationen, die angeben, dass ein erster Betrachter (200) in der Lage ist, eine Anzeige (204) visuell wahrzunehmen, und von Informationen, die angeben, dass ein zweiter Betrachter (202) in der Lage ist, die Anzeige (204) visuell wahrzunehmen;
Bestimmen eines privaten Inhalts (208) für den ersten Betrachter, der mit dem ersten Betrachter (200) assoziiert ist;
Empfangen von Informationen, die angeben, dass der zweite Betrachter (202) nicht in der Lage ist, die Anzeige (204) visuell wahrzunehmen, wobei eine Blickverfolgungskamera bestimmt, dass der zweite Betrachter eine sakkadische Augenbewegung durchführt, und die Informationen, die angeben, dass der zweite Betrachter nicht in der Lage ist, die Anzeige visuell wahrzunehmen, basierend auf der Bestimmung bestimmt werden, dass der zweite Betrachter eine sakkadische Augenbewegung durchführt;
Veranlassen einer Anzeige (204) des privaten Inhalts (208) für den ersten Betrachter, sodass der private Inhalt (208) für den ersten Betrachter innerhalb der Anzeige (204) zumindest teilweise basierend darauf angezeigt wird, dass der zweite Betrachter (202) nicht in der Lage ist, die Anzeige (204) visuell wahrzunehmen;
Empfangen von Informationen, die angeben, dass der zweite Betrachter (202) in der Lage ist, die Anzeige (204) visuell wahrzunehmen; und
Beenden der Anzeige (204) des privaten Inhalts (208) für den ersten Betrachter zumindest teilweise basierend darauf, dass der zweite Betrachter (202) in der Lage ist, die Anzeige (204) visuell wahrzunehmen.

2. Verfahren nach Anspruch 1, wobei die Veranlassung einer Anzeige des privaten Inhalts (208) für den ersten Betrachter ferner zumindest teilweise darauf basiert, dass der erste Betrachter (200) in der Lage ist, die Anzeige (204) visuell wahrzunehmen.

3. Verfahren nach einem der Ansprüche 1-2, ferner umfassend Veranlassen einer Anzeige eines nicht privaten Inhalts (206).

4. Verfahren nach einem vorangegangenen Anspruch, wobei die Blickverfolgungskamera in eine Richtung zeigt, die einer Richtung, in die die Anzeige (204) zeigt, gemein ist.

5. Vorrichtung (10), umfassend:
Mittel zum Empfangen von Informationen, die angeben, dass ein erster Betrachter (200) in der Lage ist, eine Anzeige (204) visuell wahrzunehmen, und von Informationen, die angeben, dass ein zweiter Betrachter (202) in der Lage ist, die Anzeige (204) visuell wahrzunehmen;
Mittel zum Bestimmen eines privaten Inhalts (208) für den ersten Betrachter, der mit dem ersten Betrachter (200) assoziiert ist;
Mittel zum Empfangen von Informationen, die angeben, dass der zweite Betrachter (202) nicht in der Lage ist, die Anzeige (204) visuell wahrzunehmen, wobei eine Blickverfolgungskamera bestimmt, dass der zweite Betrachter eine sakkadische Augenbewegung durchführt, und die Informationen, die angeben, dass der zweite Betrachter nicht in der Lage ist, die Anzeige visuell wahrzunehmen, basierend auf der Bestimmung bestimmt werden, dass der zweite Betrachter eine sakkadische Augenbewegung durchführt;
Mittel zum Veranlassen einer Anzeige (204) des privaten Inhalts (208) für den ersten Betrachter, sodass der private Inhalt (208) für den ersten Betrachter innerhalb der Anzeige (204) zumindest teilweise basierend darauf angezeigt wird, dass der zweite Betrachter (202) nicht in der Lage ist, die Anzeige (204) visuell wahrzunehmen;
Mittel zum Empfangen von Informationen, die angeben, dass der zweite Betrachter (202) in der Lage ist, die Anzeige (204) visuell wahrzunehmen; und
Mittel zum Beenden der Anzeige (204) des privaten Inhalts (208) für den ersten Betrachter zumindest teilweise basierend darauf, dass der zweite Betrachter (202) in der Lage ist, die Anzeige (204) visuell wahrzunehmen.

6. Vorrichtung nach Anspruch 5, wobei die Veranlassung einer Anzeige des privaten Inhalts (208) für den ersten Betrachter ferner zumindest teilweise darauf basiert, dass der erste Betrachter (200) in der Lage ist, zumindest einen Teil der Anzeige (204) visuell wahrzunehmen.

7. Vorrichtung nach einem der Ansprüche 5-6, ferner umfassend Veranlassen einer Anzeige eines nicht privaten Inhalts (206).

8. Vorrichtung nach einem der Ansprüche 5-7, wobei die Blickverfolgungskamera in eine Richtung zeigt, die einer Richtung, in die die Anzeige (204) zeigt, gemein ist.

9. Vorrichtung (10) nach Anspruch 5, wobei die Mittel zum Durchführen des Verfahrens mindestens einen Prozessor (11) und mindestens einen Speicher (12) umfassen, wobei der Speicher maschinenlesbare Anweisungen umfasst, die bei Ausführung bewirken, dass die Vorrichtung das Verfahren nach einem der Ansprüche 1-4 durchführt.

10. Computerlesbares Medium oder computerlesbare Medien, die Anweisungen umfassen, die bei Ausführung auf einer Vorrichtung nach Anspruch 5 das Verfahren nach einem der Ansprüche 1-4 durchführen.

## Revendications

1. Procédé comprenant :
la réception d'informations indiquant qu'un premier téléspectateur (200) est capable de percevoir visuellement un affichage (204), et d'informations indiquant qu'un second téléspectateur (202) est capable de percevoir visuellement l'affichage (204) ;
la détermination d'un premier contenu privé de téléspectateur (208) associé au premier téléspectateur (200) ;
la réception d'informations indiquant que le second téléspectateur (202) n'est pas capable de percevoir visuellement l'affichage (204), dans lequel une caméra de suivi du regard détermine que le second téléspectateur effectue un mouvement oculaire saccadé, et les informations indiquant que le second téléspectateur n'est pas capable de percevoir visuellement l'affichage sont déterminées en se basant sur la détermination que le second téléspectateur effectue un mouvement oculaire saccadé ;
la provocation de l'affichage (204) du premier contenu privé de téléspectateur (208) de telle sorte que le premier contenu privé de téléspectateur (208) soit affiché dans l'affichage (204) en se basant, au moins en partie, sur le fait que le second téléspectateur (202) n'est pas capable de percevoir visuellement l'affichage (204) ;
la réception d'informations indiquant que le second téléspectateur (202) est capable de percevoir visuellement l'affichage (204) ; et
la fin de l'affichage (204) du premier contenu privé de téléspectateur (208) en se basant, au moins en partie, sur le fait que le second téléspectateur (202) est capable de percevoir visuellement l'affichage (204).

2. Procédé selon la revendication 1, dans lequel la provocation de l'affichage du premier contenu privé de téléspectateur (208) est en outre basée, au moins en partie, sur le fait que le premier téléspectateur (200) est capable de percevoir visuellement l'affichage (204).

3. Procédé selon l'une quelconque des revendications 1 à 2, comprenant en outre la provocation de l'affichage d'un contenu non privé (206).

4. Procédé selon l'une quelconque des revendications précédentes, dans lequel la caméra de suivi du regard est orientée dans une direction qui est commune à une direction orientée par l'affichage (204).

5. Appareil (10) comprenant :
des moyens pour recevoir des informations indiquant qu'un premier téléspectateur (200) est capable de percevoir visuellement un affichage (204), et des informations indiquant qu'un second téléspectateur (202) est capable de percevoir visuellement l'affichage (204) ;
des moyens pour déterminer un premier contenu privé de téléspectateur (208) associé au premier téléspectateur (200) ;
des moyens pour recevoir des informations indiquant que le second téléspectateur (202) n'est pas capable de percevoir visuellement l'affichage (204), dans lequel une caméra de suivi du regard détermine que le second téléspectateur effectue un mouvement oculaire saccadé, et les informations indiquant que le second téléspectateur n'est pas capable de percevoir visuellement l'affichage sont déterminées en se basant sur la détermination que le second téléspectateur effectue un mouvement oculaire saccadé ;
des moyens pour provoquer l'affichage (204) du premier contenu privé de téléspectateur (208) de telle sorte que le premier contenu privé de téléspectateur (208) soit affiché dans l'affichage (204) en se basant, au moins en partie, sur le fait que le second téléspectateur (202) n'est pas capable de percevoir visuellement l'affichage (204) ;
des moyens pour recevoir des informations indiquant que le second téléspectateur (202) est capable de percevoir visuellement l'affichage (204) ; et
des moyens pour mettre fin à l'affichage (204) du premier contenu privé de téléspectateur (208) en se basant, au moins en partie, sur le fait que le second téléspectateur (202) est capable de percevoir visuellement l'affichage (204).

6. Appareil selon la revendication 5, dans lequel la provocation de l'affichage du premier contenu privé de téléspectateur (208) est en outre basée, au moins en partie, sur le fait que le premier téléspectateur (200) est capable de percevoir visuellement au moins une partie de l'affichage (204).

7. Appareil selon l'une quelconque des revendications 5 à 6, comprenant en outre la provocation de l'affichage d'un contenu non privé (206).

8. Appareil selon l'une quelconque des revendications 5 à 7, dans lequel la caméra de suivi du regard est orientée dans une direction qui est commune à une direction orientée par l'affichage (204).

9. Appareil (10) selon la revendication 5, dans lequel les moyens pour réaliser le procédé comprennent au moins un processeur (11) et au moins une mémoire (12), la mémoire comprenant des instructions lisibles par une machine qui, lorsqu'elles sont exécutées, contraignent l'appareil à réaliser le procédé selon l'une quelconque des revendications 1 à 4.

10. Au moins un support lisible par ordinateur comprenant des instructions qui, lorsqu'elles sont exécutées sur un appareil selon la revendication 5, réalisent le procédé selon l'une quelconque des revendications 1 à 4.
